# EUROPÄISCHE PATENTSCHRIFT

(11) **EP 1 056 962 B1**
(45) Veröffentlichungstag und Bekanntmachung des Hinweises auf die Patenterteilung: **04.08.2004**
(21) Anmeldenummer: 99962078.4
(22) Anmeldetag: 26.11.1999
(51) Int. Cl.: F16F 1/387

(54) **GUMMILAGER MIT IN UMFANGSRICHTUNG UNTERSCHIEDLICHEM KENNUNGSVERHALTEN**
RUBBER BEARING WITH CHARACTERISTIC BEHAVIOUR WHICH DIFFERS IN THE DIRECTION OF THE CIRCUMFERENCE
PALIER EN CAOUTCHOUC PRESENTANT UNE CARACTERISTIQUE QUI VARIE DANS LE SENS CIRCONFERENTIEL

(30) Priorität: 22.12.1998 DE 19859067
(43) Veröffentlichungstag der Anmeldung: 06.12.2000
(73) Patentinhaber: ZF Lemförder Metallwaren AG, 49441 Lemförde (DE)
(72) Erfinder: KAMMEL, Helmut, D-49401 Damme (DE); SICHLER, Axel, D-49492 Westerkappeln (DE)
(86) Internationale Anmeldenummer: PCT/DE1999/003756
(87) Internationale Veröffentlichungsnummer: WO 2000/037821

(56) Entgegenhaltungen:
- FR-A- 2 256 346
- GB-A- 945 860
- GB-A- 1 185 264
- GB-A- 2 018 948
- US-A- 3 147 964
- US-A- 3 467 421

## Beschreibung

Die vorliegende Erfindung betrifft ein Gummilager mit in Umfangsrichtung unterschiedlichem Kennungsverhalten, welches zur Montage in eine zylinderförmige Aufnahme vorgesehen ist.

Insbesondere im Automobilbau werden Gummilager unterschiedlichster Ausführung vielfach eingesetzt. Ihr Einsatz erfolgt insbesondere in Bauteilen für die Radaufhängung, beispielsweise zur Lagerung der Querlenker. Im allgemeinen bestehen die Lager aus einem rohrförmigen Innenteil, welches von einem Elastomer umgeben und durch Vulkanisation mit diesem verbunden ist. Die Aufnahme des Lagers erfolgt in einem äußeren, ebenfalls zylinderförmigen Rohrabschnitt.

Vielfach ist es wünschenswert, die Lager so auszubilden, daß sie, bezogen auf ihre Umfangsrichtung, Bereiche mit unterschiedlichem Kennungsverhalten aufweisen. Um dies zu erreichen, werden in dem Elastomer Ausnehmungen vorgesehen. In den Bereichen dieser Ausnehmungen weist das Lager dann eine weichere Kennung auf. Allerdings ist hierdurch in den besagten Bereichen die Beanspruchung des Elastomers durch radial eingetragene Kräfte besonders hoch. Mit dem Ziel einer gleichmäßigen Kraftübertragung und damit der Vermeidung eines Verdrückens des Gummis sowie zum Schutz des Elastomers gegen einen vorzeitigen Verschleiß durch Überbeanspruchung, ist es daher erforderlich, das Elastomer durch geeignete Maßnahmen zu stabilisieren. Hierzu ist es üblich, das Elastomer mit einem als zylindrische Hülse ausgebildeten Außenteil zu verbinden, welches beispielsweise aus Aluminium oder Kunststoff besteht. Dies bedingt einen erhöhten Fertigungsaufwand und wirkt sich daher nachteilig auf die Herstellungskosten aus. Verzichtet man hingegen auf ein solches stabilisierendes Außenteil, so bestehen jedoch bei Lagern herkömmlicher Ausbildung hinsichtlich des zu erreichenden Kennungsverhältnisses, also des Verhältnisses zwischen weicher und harter Kennung, relativ enge Grenzen. Dabei werden dann im allgemeinen höchstens Kennungsunterschiede von bis zu 20 % erzielt.

Aus GB 945,860 A ist ein Gummilager mit in Umfangsrichtung unterschiedlichem Kennungsverhalten zur Montage in ein zylinderförmiges Aufnahmeauge eines Kraftfahrzeugbauteils bekannt, das aus einem Innenteil und einem das Innenteil umgebenden, mit ihm durch Vulkanisation verbundenen Elastomer mit im wesentlichen zylinderförmiger Außenkontur besteht, wobei das Elastomer zum Erhalt von Umfangsabschnitten mit einer weichen Kennung bereichsweise Ausnehmungen aufweist und die Außenkontur der Querschnittsfläche des Innenteils über eine von der Kreisform abweichende Ausbildung verfügt. Die Gummihöhe des Elastomers des in dem Aufnahmeauge zu montieren den Lagers variiert entsprechend dem Querschnitt des Innenteils, wobei im Bereich der Ausnehmungen das Innenteil jeweils seine größte radiale Ausdehnung und das in diesen Bereichen eine im montierten Zustand erhöhte Vorspannung aufweisende Elastomer seine geringste Gummihöhe besitzt. Das aus der GB 945,860 A bekannte Gummilager kann auch unter Fortfall eines das Elastomer stabilisierenden Außenteils in das Aufnahmeauge des Kraftfahrzeugbauteils eingesetzt werden.

Aufgabe der vorliegenden Erfindung ist es daher, ein Gummilager zu schaffen, bei welchem, bezogen auf unterschiedliche Richtungen, vergleichsweise hohe Kennungsunterschiede realisierbar sind und dessen Aufbau gegenüber den bisher bekannten Lagern mit großen Unterschieden zwischen weicher und harter Kennung vereinfacht ist.

Erfindungsgemäß wird diese Aufgabe durch ein Gummilager gelöst, welches die Merkmale des Hauptanspruchs aufweist. Vorteilhafte Ausgestaltungen des erfindungsgemäßen Lagers sind durch die Unteransprüche gegeben.

Das mit der vorliegenden Lösung vorgeschlagene Gummilager mit in Umfangsrichtung unterschiedlichem Kennungsverhalten, welches zur Montage in ein zylinderförmiges Aufnahmeauge vorgesehen ist, besteht in bekannter Weise aus einem Innenteil und einem das Innenteil umgebenden, mit ihm durch Vulkanisation verbundenen Elastomer mit im wesentlichen zylinderförmiger Außenkontur, das zum Erhalt von Umfangsabschnitten mit einer weicheren Kennung bereichsweise Ausnehmungen aufweist Die Außenkontur der Querschnittsfläche des Innenteils weist im Gegensatz zu seiner Innenkontur eine von der Kreisform abweichende Ausbildung auf Die Gummihöhe des Elastomers des unter Fortfall eines stabilisierenden Außenringes in dem Aufnahmeauge montierten Lagers variiert entsprechend dem Querschnitt des Innenteils, wobei im Bereich der Ausnehmungen das Innenteil jeweils seine größte radiale Ausdehnung und das in diesen Bereichen eine erhöhte Vorspannung aufweisende Elastomer seine geringste Gummihöhe besitzt.
Soweit sich bei der Belastung des Lagers in einem durch eine Ausnehmung gebildeten Hohlraum ein erhöhter Druck wegen der darin befindlichen Luft aufbaut, erfolgt über einen hierzu vorgesehenen Kanal zwischen diesem Hohlraum und der jeweils gegenüberliegenden Ausnehmung ein Druckausgleich. Es ist somit bei entsprechender Abdichtung des Lagers auch denkbar, in die gebildeten Hohlräume zusätzlich ein flüssiges Dämpfungsmittel einzubringen, welches durch die Kanäle ebenfalls entsprechend der jeweiligen Belastung ausweichen kann.

Gemäß einer Ausgestaltung der Erfindung weist das Innenteil eine rechteckähnliche Querschnittsform auf, wobei die jeweils kurzen Seiten dieser rechteckähnlichen Form abgerundet und in radialer Richtung nach außen gewölbt als Kreissegment ausgebildet sind. Hierdurch ergibt sich für das Innenteil eine große, durch die Längsmittenachse des Lagers verlaufende Hauptachse und im rechten Winkel dazu eine Nebenachse. Bei einer anderen möglichen Ausbildungsform weist das Innenteil die Form einer Ellipse auf, welche an den Enden ihrer Hauptachse abgeflacht ist.

Das Achsverhältnis von Haupt- zu Nebenachse beträgt dabei gemäß praxisrelevanter Ausbildungen des erfindungsgemäßen Lagers 3 : 2 bzw. 26 : 17, wodurch ein Kennungsverhältnis von 2 : 1 erhältlich ist. Durch die Bemessung des Verhältnisses zwischen der Haupt- und der Nebenachse des Innenteils und eine darauf abgestimmte Außenkontur des Elastomers sind im Sinne der Erfindung unterschiedlichste Kennungsverhältnisse für das Lager erhältlich.

So ist unter Beibehaltung des erfindungsgemäßen Grundprinzips eine weitere vorteilhafte Ausgestaltung des Gummilagers dadurch gegeben, daß zusätzlich zu der veränderten Form des Innenteils eine geringfügige Modifizierung der Außenkontur des Elastomers vorgenommen wird, bei der die Gummihöhe des Elastomers so vergrößert wird, daß das Innenteil mit dem Elastomer einen Außendurchmesser aufweist, der vor der Montage des Lagers größer ist als der Innendurchmesser des Aufnahmeauges. Zusätzlich ist es möglich, die Kennungsverhältnisse zu beeinflussen, indem man in der Nähe der Ausnehmungen lokal begrenzte, radial nach außen gerichtete Ausformungen im Elastomer ausgebildet. Im Bereich dieser Ausformungen ist die Gummihöhe dadurch vor der Montage des Lagers noch zusätzlich erhöht. Durch die Montage im Aufnahmeauge wird das Elastomer im Bereich der Ausnehmungen zusammengeschoben, so daß sich die Ausnehmungen verkleinern und das Elastomer in diesem Bereich wiederum seine geringste Gummihöhe besitzt. Während des bestimmungsgemäßen Einsatzes des Lagers wirken dabei die vor der Montage sichtbaren Ausformungen im Elastomer gegenüber radial auftretenden Belastungen als wegbegrenzender Puffer. In Anbetracht dessen, daß sich hierdurch auch gewisse Auswirkungen auf das Kennungsverhalten ergeben, ist es somit denkbar das Kennungsverhalten des Lagers durch die Ausbildung derartiger Puffer und ihre Bemessung gezielt zu beeinflussen. Erfindungswesentlich ist es in jedem Falle, daß die Ausnehmungen unabhängig von Außenkontur des Elastomers und von der Formgestaltung des Innenteils im montierten Zustand erhalten bleiben und zwischen dem Elastomer und der Aufnahme einen Hohlraum ausbilden.

Das erfindungsgemaße Gummilager weist durch den Fortfall des Außenteils einen deutlich vereinfachten Aufbau auf Hierdurch ergibt sich auch ein erheblicher Kostenvorteil des erfindungsgemäßen Lagers gegenüber bisher bekannten vergleichbaren Gummilagern. Weiterhin ist die sich ergebende Gewichtsverringerung als vorteilhaft anzusehen.

Durch entsprechende Gestaltung des Innenteils und eine möglicherweise zusätzliche Modifizierung der im wesentlichen zylinderförmigen Außenkontur des Elastomers, wird hinsichtlich der Kennungsverhältnisse eine sehr hohe Variabilität erreicht. Damit läßt sich beispielsweise ein Kennungsverhältnis von 2 : 1 erreichen, was mit Lagern nach dem Stand der Technik bisher nur unter Einsatz eines Außenteils realisierbar war. Darüber hinaus läßt sich das jeweilige Kennungsverhältnis in günstiger Weise sehr einfach und fein abstimmen.

Nachfolgend soll die Erfindung anhand eines Ausführungsbeispieles näher erläutert werden. In der zugehörigen Zeichnung zeigen:
- Figur 1 :: Die Prinzipdarstellung des erfindungsgemäßen Lagers,
- Figur 2a:: Eine Variante des erfindungsgemäßen Lagers mit einer in der Nähe der Ausnehmungen vergrößerten Gummihöhe,
- Figur 2b:: Das Lager gemäß Figur 2 nach der Montage in der Aufnahme,
- Figur 3 :: Das erfindungsgemäße Lager in einer Seitenansicht
- Figur 4 :: Ein Lager mit unterschiedlichem Kennungsverhalten gemäß dem Stand der Technik.

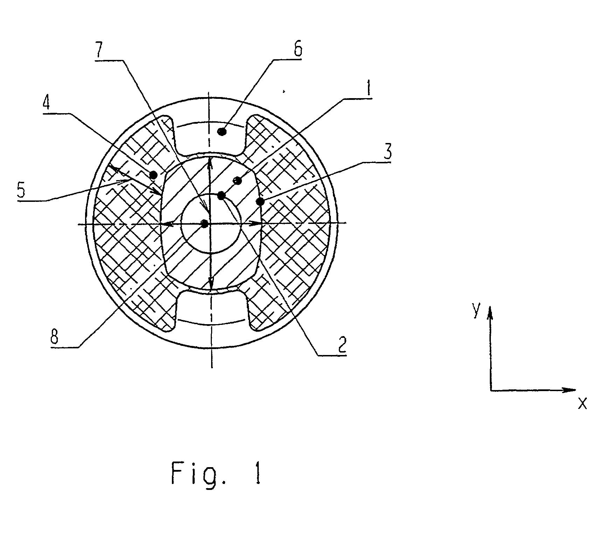

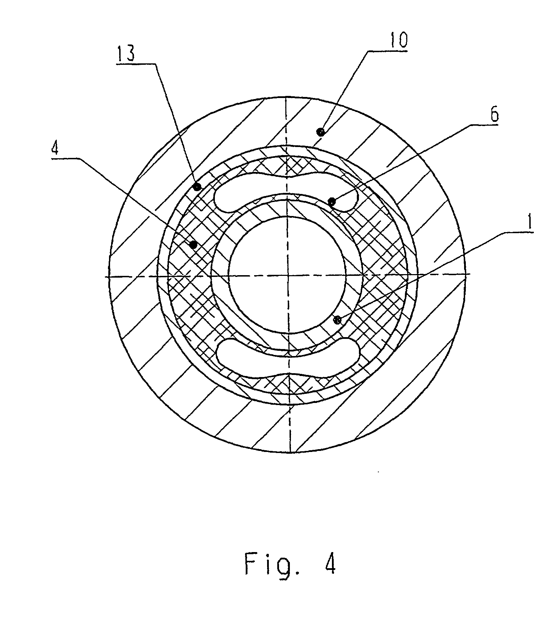

Die Figur 1 verdeutlicht den grundsätzlichen Aufbau des erfindungsgemäßen Lagers in einer Schnittdarstellung. Um ein Innenteil ist das Elastomer 4 angeordnet und mit diesem durch Vulkanisation verbunden. Das Elastomer 4 weist zum Erhalt einer in y-Richtung weicheren Kennung Ausnehmungen 6 auf. Die das Lager ausbildenden Teile werden vor ihrer bestimmungsgemäßen Verwendung in einem zylinderförmigen Aufnahmeauge 10 montiert. Die Montage erfolgt entgegen den bisher bekannten Lagern mit großen Kennungsunterschieden, wie beispielsweise eines durch das Lager gemäß Figur 4 veranschaulicht wird, unter Fortfall eines das Lager umgebenden Außenringes 13. Aufgrund der erfindungsgemäßen Ausbildung ist eine solche Stabilisierungsmaßnahme nicht erforderlich. Durch die Gestaltung des Innenteils werden im Elastomer nach dessen Montage im Aufnahmeauge 10 vorgespannte Bereiche erzeugt und dadurch eine Relativbewegung zwischen Elastomer und Aufnahmeauge unter Belastung, insbesondere durch Verdrehung des Bauteils verhindert. Das Elastomer 4 kann sich bei entsprechender Belastung allenfalls im geringen Maße in sich selbst verdrehen. Vorliegend weist das Innenteil 1, wie zu erkennen, eine rohrförmige Innenkontur 2 und eine Außenkontur 3 mit einer ellipsenförmigen Ausbildung auf An den Enden ihrer Hauptachse 7 ist diese Ellipse abgeflacht ausgebildet. Durch die beschriebene Ausbildung des Innenteils 1 wird die nach der Montage in dem Aufnahmeauge 10 resultierende Gummihöhe im Bereich der Ausnehmungen 6 verringert. Das Elastomer 4 weist dabei durch die Gestaltung des Innenteils 1 in diesen Bereichen eine erhöhte Vorspannung auf. Zum Erhalt einer in der y-Richtung weicheren Kennung ist es dabei wichtig, daß das Innenteil 1 und das mit ihm verbundene Elastomer 4 so gestaltet sind, daß die Ausnehmungen 6 auch nach der Montage im Aufnahmeauge 10 oder Aufnahmerohr erhalten bleiben.

In dem dargestellten Beispiel stehen die Haupt- und die Nebenachse 7, 8 des Innenteils 1 in einem Längenverhältnis von 3:2. Hierdurch wird bei Verwendung eines Elastomers 4 üblicher Materialbeschaffenheit ein Verhältnis der Kennungen zwischen der y- und der x-Richtung von 2:1 erreicht. Im Bereich der Ausnehmungen 6 führt die getroffene Maßnahme zu einer deutlich weicheren Kennung, ohne daß das Elastomers 4 in diesem Bereich überbeansprucht wird. Unter Verzicht auf ein stabilisierendes Außenteil ist ein solches Kennungsverhältnis bei einer herkömmlichen Ausbildung des Lagers entsprechend dem Stand der Technik nicht zu erzielen. Ohne Außenteil wird bei Lagern nach dem Stand der Technik im Bereich der Ausnehmungen in der Regel eine höchstens um 20 % weichere Kennung erreicht.

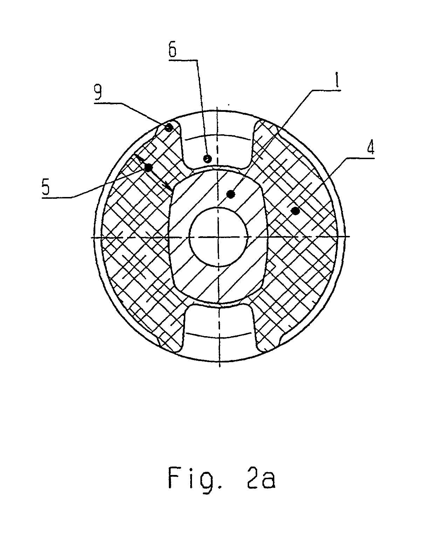

In der Figur 2a ist eine Variante des erfindungsgemäßen Lagers dargestellt, bei welchem neben der vorgenommenen Formänderung des Innenteils 1 zusätzlich eine Modifizierung der Außenkontur des Elastomers 4 vorgesehen ist. Die Gummihöhe 5 des Elastomers 4 ist dabei derart vergrößert, daß das Elastomer 4 mit eingeschlossenem Innenteil 1 vor der Montage einen Außendurchmesser aufweisen, der über dem Innendurchmesser des Aufnahmeauges 10 liegt. Bei dier dargestellten Ausführungsform weist die Außenkontur 11 des Elastomers 4 außerdem in lokal begrenzten Bereichen in der Nähe der Ausnehmungen jeweils eine Ausformung 9 auf, durch welche die Gummihöhe 5 in diesem Bereich vor der Montage im Aufnahmeauge 10 zusätzlich vergrößert ist. Hierdurch entsteht in diesen Bereichen ein Puffer, welcher wegbegrenzend wirkt und dadurch zu einer zusätzlichen Stabilisierung des Elastomers 4 führt. Es ist aber auch denkbar, auf diese Weise das Kennungsverhalten des Lagers fein abzustimmen. Im montierten Zustand weist jedoch das Elastomer 4 auch im Bereich der Puffer 9 durch das notwendige Stauchen eine geringere Gummihöhe 5 auf als dies in den 90° gegenüber den Ausnehmungen versetzten Bereichen der Fall ist. Das erfinderische Prinzip bleibt, soweit darauf geachtet wird, daß die Ausnehmungen auch nach der Montage vorhanden sind, dabei voll erhalten.

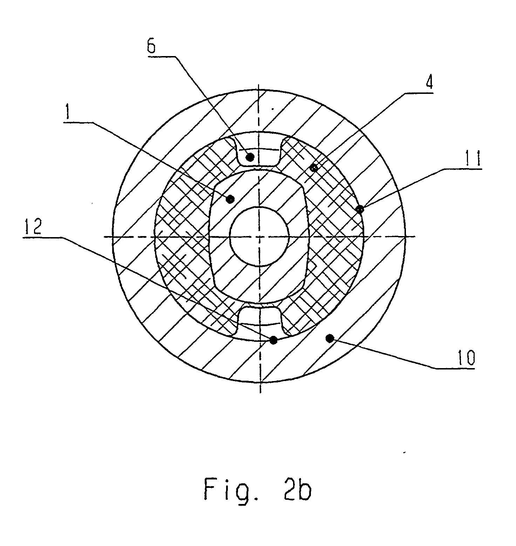

In der Figur 2b ist das Lager gemäß der Figur 2a nochmals nach der Montage in das Aufnahmeauge 10 dargestellt. Wie zu erkennen ist, weist die Anordnung in etwa eine zur Figur 1 gleiche Erscheinungsform auf. Lediglich die Ausnehmungen 6 sind aufgrund des in den Bereichen vergrößerter Gummihöhe gestauchten Elastomers 4 etwas kleiner.

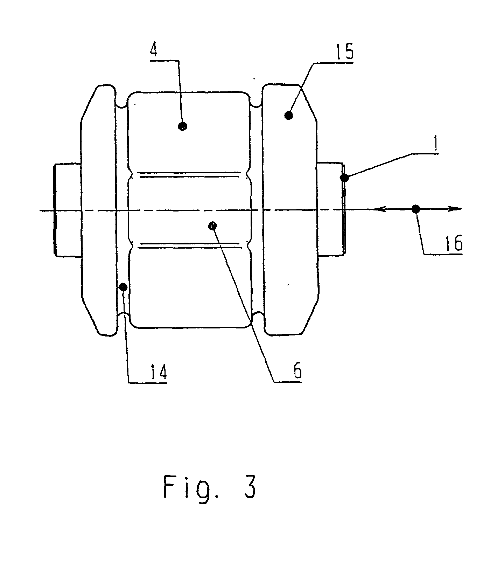

Die Figur 3 vermittelt eine Darstellung des erfindungsgemäßen Lagers in einer Seitenansicht. Deutlich zu erkennen ist hierbei die Ausbildung des Elastomers 4 mit den darin eingearbeiteten Ausnehmungen 6. Da die in den Ausnehmungen 6, auch nach der Montage in das Aufnahmeauge 10, enthaltene Luft bei einer radialen Krafteinwirkung in diesem Bereich zusammengepreßt wird, sind zur Vermeidung des Aufbaus eines erhöhten Drucks im Randbereich des Lagers Kanäle 14 vorgesehen, über welche die Luft zu der jeweils gegenüberliegenden Ausnehmung 6 ausweichen kann. Das dargestellte Lager ist in seiner axialen Erstreckung über die axiale Länge des in der Figur nicht dargestellten Aufnahmeauges 10 verlängert. Die nach der Montage aus dem Aufnahmeauge 10 herausragenden Außenbereiche 15 des Elastomers 4 besitzen einen gegenüber dem eigentlichen Lagerkörper vergrößerten Durchmesser. Hierdurch wird das in das Aufnahmeauge 10 eingebrachte Lager gegen von außen eindringenden Schmutz nach Art einer Dichtung geschützt. Prinzipiell läßt diese Ausbildungsvariante die Möglichkeit zu, zur Beeinflussung des Dämpfungsverhaltens zusätzlich in die Ausnehmungen 6, welche nach der Montage in dem Aufnahmeauge 10 durch dessen Innenkontur 12 begrenzte Hohlräume ausbilden, ein flüssiges Dämpfungsmittel einzubringen. Auch dieses kann dann - eine hinreichende Abdichtung des Lagers nach außen ist natürlich Voraussetzung - bei auftretenden Belastungen zwischen den Ausnehmungen 6 über die Kanäle 14 hin- und herfließen.

In der Figur 4 ist zu Vergleichszwecken die Ausbildung eines Lagers mit variablem Kennungsverhalten gemäß dem Stand der Technik dargestellt. Wie zu erkennen ist, sind auch bei diesem Lager in dem Elastomer 4 zur Beeinflussung des Kennungsverhaltens Ausnehmungen 6 vorgesehen. Aufgrund der zylindrischen Form des Lagerinnenteils 1 ist jedoch das Elastomer im Bereich der Ausnehmungen im Einsatzfall einer verstärkten Beanspruchung ausgesetzt. Um ein Verdrücken und eine Herabsetzung der Standzeit des Elastomers 4 zu vermeiden, ist das Elastomer 4 daher von einem stabilisierenden Ring 13 umgeben.

### Bezugszeichen:

- 1: Innenteil
- 2: Innenkontur des Innenteils
- 3: Außenkontur des Innenteils
- 4: Elastomer, Gummi
- 5: Gummihöhe
- 6: Ausnehmung
- 7: Hauptachse
- 8: Nebenachse
- 9: Ausformung, Puffer
- 10: Aufnahmeauge
- 11: Außenkontur des Elastomers
- 12: Innenkontur des Aufnahmeauges
- 13: Außenteil
- 14: Kanal
- 15: Randbereich des Elastomers
- 16: axiale Richtung

## Patentansprüche

1. Gummilager mit in Umfangsrichtung unterschiedlichem Kennungsverhalten zur Montage in ein zylinderförmiges Aufnahmeauge (10), bestehend aus einem Innenteil ( 1 ) und einem das Innenteil (1) umgebenden, mit ihm durch Vulkanisation verbundenen Elastomer (4) mit im wesentlichen zylinderförmiger Außenkontur, welches zum Erhalt von Umfangsabschnitten mit einer weichen Kennung bereichsweise Ausnehmungen (6) aufweist, wobei die Außenkontur (3) der Querschnittsfläche des Innenteils (1) eine von der Kreisform abweichende Ausbildung aufweist und die Gummihöhe (5) des Elastomers (4) des unter Fortfall eines stabilisierenden Außenteils (13) in dem Aufnahmeauge (10) zu montieren den Lagers entsprechend dem Querschnitt des Innenteils (1) variiert, wobei im Bereich der Ausnehmungen (6) das Innenteil (1) jeweils seine größte radiale Ausdehnung und das in diesen Bereichen eine im montierten Zustand erhöhte Vorspannung aufweisende Elastomer (4) seine geringste Gummihöhe (5) besitzt,
**dadurch gekennzeichnet, dass**
das Gummilager in seinem Randbereich, zur Vermeidung des Aufbaus eines erhöhten Drucks im montierten Gummilager, ein Ausweichen von Luft oder flüssigem Dämpfungsmittel von einer Ausnehmung (6) zu der jeweils gegenüberliegenden Ausnehmung (6) ermöglichende Kanäle (14) aufweist.

2. Gummilager nach Anspruch 1, **dadurch gekennzeichnet, dass** das Innenteil ( 1 ) eine rechteckähnliche Querschnittsform aufweist, wobei die kurzen Seiten dieser rechteckähnlichen Querschnittsfläche kreisbogenförmig in radialer Richtung nach außen gewölbt sind und die Querschnittsfläche eine Hauptachse (7) mit einer in radialer Richtung maximalen Materialhöhe des Innenteils (1) und eine Nebenachse (8) mit einer in radialer Richtung minimalen Materialhöhe des Innenteils (1) aufweist.

3. Gummilager nach Anspruch 1, **dadurch gekennzeichnet, dass** das Innenteil (1) die Form einer Ellipse aufweist, welche an den Enden ihrer Hauptachse (7) abgeflacht ist.

4. Gummilager nach Anspruch 2 oder 3, **dadurch gekennzeichnet, dass** die Haupt- und die Nebenachse (7, 8) zueinander in einem Verhaltnis von 3 : 2 ausgebildet sind und das Lager ein Kennungsverhältnis von 2 : 1 aufweist.

5. Gummilager nach Anspruch 2 oder 3, **dadurch gekennzeichnet, dass** die Haupt- und die Nebenachse (7, 8) zueinander in einem Verhältnis von 26 : 17 ausgebildet sind und das Lager ein Kennungsverhältnis von 2 : 1 aufweist.

6. Gummilager nach einem der Ansprüche 1 bis 5, **dadurch gekennzeichnet, dass** das Elastomer (4) bereichsweise eine vergrößerte Gummihöhe (5) aufweist, durch die der Außendurchmesser des Elastomers (4) vor der Montage in dem Aufnahmeauge (10) größer ist, als der Innendurchmesser des Aufnahmeauges (10), wobei die Ausnehmungen (6) im Elastomer (4) nach der Montage erhalten bleiben und das Elastomer (4) im Bereich der Ausnehmungen (6) seine geringste Gummihöhe (5) besitzt.

7. Gummilager nach Anspruch 6, **dadurch gekennzeichnet, dass** das Elastomer (4) in der Nähe der darin ausgebildeten Ausnehmungen (6) lokal begrenzte, radial nach außen gerichtete Ausformungen (9) aufweist, in deren Bereich das Elastomer (4) vor der Montage des Lagers in dem Aufnahmeauge (10) eine gegenüber den angrenzenden Bereichen vergrößerte Gummihöhe (5) aufweist und durch die nach der Montage in dem Aufnahmeauge (10) beim bestimmungsgemäßen Einsatz des Lagers gegenüber radial auftretenden Belastungen jeweils ein zusätzlich wegbegrenzend wirkender Puffer gebildet ist.

8. Gummilager nach einem der Ansprüche 1-7, **dadurch gekennzeichnet, dass** in die zwischem dem Elastomer (4) und der Innenkontur (12) des Aufnahmeauges (10) jeweils eine Kammer ausbildenden Ausnehmungen (6) ein flüssiges Dämpfungsmittel eingebracht ist.

9. Gummilager nach einem der Ansprüche 1 bis 8, **dadurch gekennzeichnet, dass** das Elastomer (4) in axialer Richtung (16) über die axiale Erstreckung des Aufnahmeauges (10) hinaus verlängert ist und in diesen nach der Montage außerhalb des Aufnahmeauges (10) befindlichen Randbereichen (15) einen gegenüber dem Innendurchmesser des Aufnahmeauges (10) geringfügig vergrößerten Außendurchmesser aufweist, wodurch das Lager gegen mögliche Verunreinigungen abgedichtet ist.

## Claims

1. Rubber bearing, the characteristic behaviour of which differs in peripheral direction and which is intended for mounting into a cylindrical receiving eye (10), comprising an inner part (1) and an elastomer (4) with a substantially cylindrical external contour, which surrounds the inner part (1) and is connected thereto by vulcanization and which, in order to obtain peripheral portions with a soft characteristic, in sections has recesses (6), wherein the external contour (3) of the cross-sectional surface of the inner part (1) is of a construction differing from the circular shape and the rubber height (5) of the elastomer (4) of the bearing, which is to be mounted without a stabilizing outer part (13) in the receiving eye (10), varies in accordance with the cross section of the inner part (1), wherein in the region of the recesses (6) the inner part (1) has in each case its greatest radial extension and the elastomer (4), which in the mounted state has an increased bias in said regions, has its lowest rubber height (5),
**characterized in that**
the rubber bearing in its edge region, in order to prevent the build-up of an increased pressure in the mounted rubber bearing, has channels (14) enabling an escape of air or liquid damping medium from one recess (6) to the, in each case, opposite recess (6).

2. Rubber bearing according to claim 1, **characterized in that** the inner part (1) has a cross-sectional shape similar to a rectangle, wherein the short sides of said rectangle-like cross-sectional surface are curved radially outwards in an arc-shaped manner and the cross-sectional surface has a major axis (7) with an, in radial direction, maximum material height of the inner part (1) as well as a minor axis (8) with an, in radial direction, minimum material height of the inner part (1).

3. Rubber bearing according to claim 1, **characterized in that** the inner part (1) has the shape of an ellipse, which is flattened off at the ends of its major axis (7).

4. Rubber bearing according to claim 2 or 3, **characterized in that** the major and the minor axis (7, 8) are in a ratio of 3:2 and the bearing has a characteristic ratio of 2:1.

5. Rubber bearing according to claim 2 or 3, **characterized in that** the major and the minor axis (7, 8) are in a ratio of 26:17 and the bearing has a characteristic ratio of 2:1.

6. Rubber bearing according to one of claims 1 to 5, **characterized in that** the elastomer (4) in sections has an increased rubber height (5), as a result of which the outside diameter of the elastomer (4) prior to mounting in the receiving eye (10) is greater than the inside diameter of the receiving eye (10), wherein the recesses (6) in the elastomer (4) are retained after mounting and the elastomer (4) has its lowest rubber height (5) in the region of the recesses (6).

7. Rubber bearing according to claim 6, **characterized in that** the elastomer (4) in the vicinity of the recesses (6) formed therein has locally delimited, radially outwardly directed bulges (9), in the region of which the elastomer (4) prior to mounting of the bearing in the receiving eye (10) has a greater rubber height (5) than in the adjoining regions and each of which after mounting in the receiving eye (10) during the intended use of the bearing forms in relation to radially occurring loads a buffer with an additional displacement-limiting effect.

8. Rubber bearing according to one of claims 1 - 7, **characterized in that** a liquid damping medium is introduced into the recesses (6), each of which forms a chamber between the elastomer (4) and the internal contour (12) of the receiving eye (10).

9. Rubber bearing according to one of claims 1 to 8, **characterized in that** the elastomer (4) is lengthened in axial direction (16) beyond the axial extension of the receiving eye (10) and in said edge regions (15), which after mounting are situated outside of the receiving eye (10), has an outside diameter slightly greater than the inside diameter of the receiving eye (10), with the result that the bearing is sealed against possible contaminants.

## Revendications

1. Palier en caoutchouc ayant des comportements caractéristiques différents selon la direction circonférentielle, destiné à être monté dans un oeillet de logement de forme cylindrique (10), constitué par une partie intérieure (1) et par un élastomère (4), qui entoure la partie intérieure (1), qui est relié à cette dernière par vulcanisation et qui possède un contour extérieur de forme essentiellement cylindrique et qui comporte par endroits des évidements (6) pour recevoir des parties périphériques ayant une caractéristique souple, dans lequel le contour extérieur (3) de la surface en coupe transversale de la partie intérieure (1) possède une configuration qui diffère de la forme circulaire, et la hauteur de caoutchouc (5) de l'élastomère (4) du palier devant être monté dans l'oeillet de logement (10) moyennant la suppression d'une partie extérieure de stabilisation (13) varie conformément à la section transversale de la partie intérieure (1), et dans lequel la partie intérieure (1) possède respectivement son étendue radiale maximale dans la zone des évidements (6), et l'élastomère (4), qui à l'état monté est soumis à une précontrainte accrue, possède sa hauteur de caoutchouc la plus faible (5), **caractérisé en ce**
**que** le palier en caoutchouc comporte dans sa partie marginale, pour éviter l'établissement d'une pression accrue dans le palier en caoutchouc à l'état monté, des canaux (14) permettant une évacuation de l'air ou d'un milieu d'amortissement liquide depuis un évidement (6) en direction de l'évidement respectivement opposé (6).

2. Palier en caoutchouc selon la revendication 1, **caractérisé en ce que** la partie intérieure (1) possède une forme en coupe transversale de type similaire à une forme rectangulaire, les petits côtés de cette surface en coupe transversale de forme similaire à un rectangle étant cintrés vers l'extérieur avec une forme d'arc de cercle dans la direction radiale et les surfaces en coupe transversale possédant un axe principal (7) avec une hauteur maximale, dans la direction radiale, du matériau de la partie intérieure (1), et un axe secondaire (8) avec une hauteur minimale, dans la direction radiale, du matériau de la partie intérieure (1).

3. Palier en caoutchouc selon la revendication 1, **caractérisé en ce que** la partie intérieure (1) possède la forme d'une ellipse, qui est aplatie au niveau des extrémités de son axe principal (7).

4. Palier en caoutchouc selon la revendication 2 ou 3, **caractérisé en ce que** l'axe principal et l'axe secondaire (7, 8) sont réalisés d'une manière à être l'un par rapport à l'autre dans un rapport égal à 3:2 et que le palier possède un rapport caractéristique égal à 2:1.

5. Palier en caoutchouc selon la revendication 2 ou 3, **caractérisé en ce que** l'axe principal et l'axe secondaire (7, 8) sont réalisés de manière à présenter entre eux un rapport égal à 26:17 et que le palier possède un rapport caractéristique de 2:1.

6. Palier en caoutchouc selon l'une des revendications 1 à 5, **caractérisé en ce que** l'élastomère (4) possède par endroits une hauteur de caoutchouc accrue (5), grâce à laquelle le diamètre extérieur de l'élastomère (4) avant le montage dans l'oeillet de logement (10) est supérieur au diamètre intérieur de l'oeillet de logement (10), les évidements (6) dans l'élastomère (4) restant conservés après le montage et l'élastomère (4) possédant la plus faible hauteur de caoutchouc (5) dans la zone des évidements (6).

7. Palier en caoutchouc selon la revendication 6, **caractérisé en ce que** l'élastomère (4) possède à proximité des évidements (6) formés en lui, des configurations (9) limitées localement et dirigées radialement vers l'extérieur, dans la zone desquelles l'élastomère (4) possède, avant le montage du palier dans l'oeillet de logement (10), une hauteur de caoutchouc (5) accrue par rapport aux zones contiguës, et à l'aide desquelles après le montage dans l'oeillet de logement (10) et lors de l'insertion conforme aux spécifications du palier par rapport à des contraintes apparaissant radialement, un tampon agissant en supplément en tant que limiteur de course est formé respectivement.

8. Palier en caoutchouc selon l'une des revendications 1 à 7, **caractérisé en ce qu'**un moyen d'amortissement liquide est inséré dans les évidements (6) qui forment respectivement une chambre entre l'élastomère (4) et le contour intérieur (12) de l'oeillet de logement (10).

9. Palier en caoutchouc selon l'une des revendications 1 à 8, **caractérisé en ce que** l'élastomère (4) se prolonge dans la direction axiale (16), au-delà de l'étendue axiale de l'oeillet de logement (10) et comporte, dans ses zones marginales (15) situées après le montage hors de l'oeillet de logement (10), un diamètre extérieur légèrement accru par rapport au diamètre intérieur de l'oeillet de logement (10), ce qui a pour effet que le palier est fermé de façon étanche vis-à-vis de la pénétration d'éventuelles saletés.
